Europäisches Patentamt

European Patent Office

Office européen des brevets

(11) Veröffentlichungsnummer: **0 234 375 B1**

(19)

(12) EUROPÄISCHE PATENTSCHRIFT

(45) Veröffentlichungstag der Patentschrift: **19.02.92**

(21) Anmeldenummer: **87101689.5**

(22) Anmeldetag: **07.02.87**

(51) Int. Cl.⁵: **G01D 5/26**, G01D 5/38, H03M 1/30

(54) Lichtelektrische inkrementale Positionsmesseinrichtung.

(30) Priorität: **22.02.86 DE 3605789**

(43) Veröffentlichungstag der Anmeldung:
**02.09.87 Patentblatt 87/36**

(45) Bekanntmachung des Hinweises auf die
Patenterteilung:
**19.02.92 Patentblatt 92/08**

(84) Benannte Vertragsstaaten:
**DE FR GB IT**

(56) Entgegenhaltungen:

**Keine Entgegenhaltungen.**

(73) Patentinhaber: **Dr. Johannes Heidenhain
GmbH
Dr.-Johannes-Heidenhain-Strasse 5 Postfach
1260
W-8225 Traunreut(DE)**

(72) Erfinder: **Kraus, Heinz
Traunring 74e
W-8225 Traunreut(DE)**

EP 0 234 375 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf eine lichtelektrische inkrementale Positionsmeßeinrichtung nach dem Oberbegriff des Anspruchs 1.

Positionsmeßeinrichtungen, die mit Phasengittern als Maßverkörperung arbeiten, erlauben prinzipbedingt relativ große Abtastabstände, d.h. daß der Abstand zwischen dem Phasengitter der Maßverkörperung und dem sogenannten Referenzgitter an der Abtasteinrichtung verhältnismäßig groß sein kann. Abstandsschwankungen sind auch nicht so eng toleriert, wie etwa bei lichtelektrischen Positionsmeßeinrichtungen, die mit Amplitudengittern als Meßteilung arbeiten.

Diese prinzipbedingten Vorteile der Positionsmeßeinrichtungen, die mit Phasengittern arbeiten, werden jedoch wieder eingeschränkt durch die Empfindlichkeit derartiger Meßeinrichtungen gegenüber Ebenheitsschwankungen und Führungsfehlern, die zu Kippungen zwischen Maßstabgitter und Referenzgitter führen.

Die Dissertation von Jörg Willhelm, TU Hannover, 1978 enthält die theoretischen Grundlagen derartiger Positionsmeßeinrichtungen. Dort wird auf den Seiten 82 bis 85 die Kippempfindlichkeit abgehandelt, ohne daß jedoch ein Lösungsweg angegeben wird, wie diese Abhängigkeit beseitigt werden kann. Die auf Seite 85 unten vorgeschlagene Lösung - im Durchlicht zu arbeiten - ist unbefriedigend.

Der Erfindung liegt die Aufgabe zugrunde, eine Positionsmeßeinrichtung der eingangs genannten Art zu schaffen, bei der Fehler durch Unebenheit der Maßverkörperung und/oder der Führung weitgehend eliminiert sind, so daß die diesbezüglichen Toleranzen erheblich ausgeweitet werden können.

Diese Aufgabe wird von einer Positionsmeßeinrichtung gelöst, die die Merkmale des Anspruchs 1 aufweist.

Vorteilhafte Ausgestaltungen entnimmt man den abhängigen Ansprüchen.

Die Vorteile der erfindungsgemäßen Positionsmeßeinrichtung liegen im verhältnismäßig einfachen Aufbau der Maßverkörperung und der Abtasteinrichtung, sowie in den verhältnismäßig geringen Anforderungen an die Herstellungsgenauigkeit der kompletten Positionsmeßeinrichtungen. Besonders bei großen Meßlängen wirkt sich sehr vorteilhaft aus, daß an die Ebenheit der montierten Maßverkörperung und an die Führung nicht mehr extreme Genauigkeitsanforderungen gestellt werden, ohne daß die grundsätzlichen Vorteile des genannten Meßprinzipes verlorengehen.

Mit Hilfe der Zeichnungen soll die Erfindung anhand eines Ausführungsbeispiels noch näher erläutert werden.

Es zeigt

| Figur 1 | einen Ausschnitt aus einer schematisch dargestellten Längenmeßeinrichtung; |
| Figur 2 | eine Draufsicht auf eine Längenmeßeinrichtung im Schnitt; |
| Figur 3 | eine Schnittdarstellung der Längenmeßeinrichtung gemäß Figur 2 entlang der Schnittlinie III/III; |
| Figur 4 | einen Abschnitt einer Maßverkörperung mit einem Ebenheitsfehler; |
| Figur 5 | Fehlersignalverläufe beim Abtasten der Maßverkörperung gemäß Figur 4 mit einer Längenmeßeinrichtung gemäß Figur 1; |
| Figur 6a | einen Abschnitt einer Maßverkörperung; |
| Figur 6b | eine räumliche Ansicht des Maßverkörperungsabschnittes gemäß Figur 6a. |

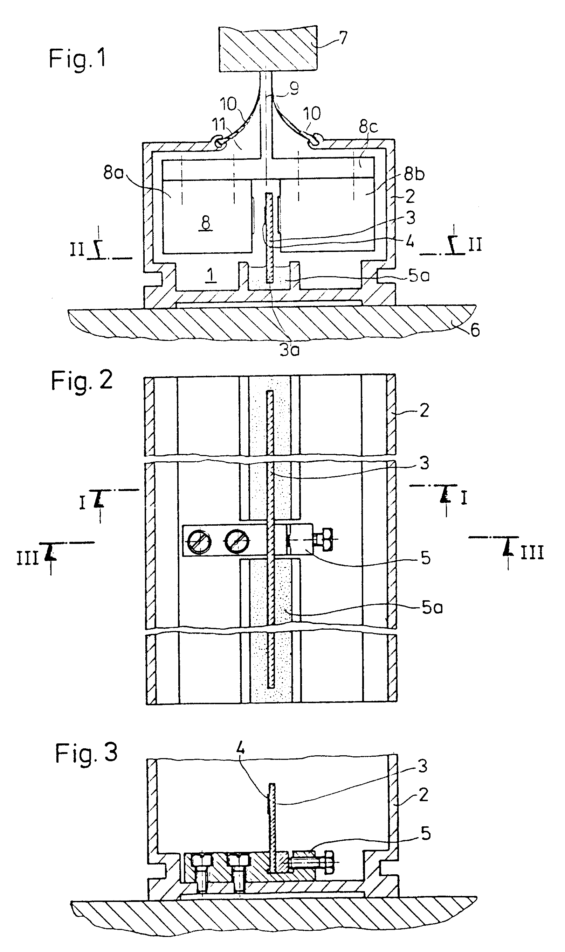

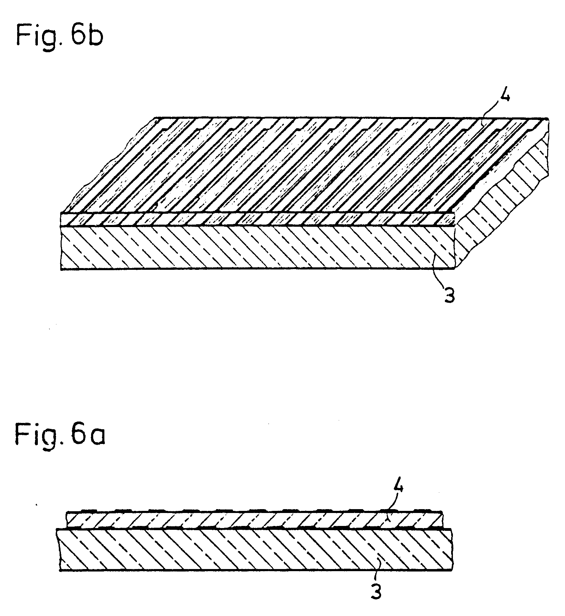

In Figur 1 ist eine Positionsmeßeinrichtung 1 im Querschnitt schematisch dargestellt. Ein extrudiertes Leichtmetall-Hohlprofil 2 trägt im Innern eine Maßverkörperung 3, die eine Längen-Meßteilung 4 aufweist. Die Meßteilung 4 ist als Auflichtphasengitter aufgebaut, wie später anhand der Figuren 6a und 6b noch näher erläutert wird.

Die Maßverkörperung 3 ist transparent, beispielsweise aus Floatglas hergestellt, und hochkant im Hohlprofil 2 befestigt. Die Befestigung erfolgt mit Hilfe einer Spannpratze 5, etwa in der Mitte der Meßlänge (s. auch Figuren 2 und 3). Die freien Enden der Maßverkörperung 3 sind nicht am Hohlprofil 2 fixiert, so daß keine Spannungen zwischen der Maßverkörperung 3 und dem Hohlprofil 2 auftreten können, wenn es zu Temperaturschwankungen kommt.

Um jedoch Schwingungen der Maßverkörperung 3 zu verhüten, und auch um Verbiegungen aufgrund ihres Eigengewichtes in den verschiedenen Gebrauchslagen zu verhindern, ist die Maßverkörperung 3 an ihrer Basis 3a in einer dauerelastischen Vergußmasse 5a eingebettet.

Das Hohlprofil 2 kann in beliebiger Anbaulage an einem Maschinen-Bauteil 6 befestigt sein, dessen Relativlage zu einem anderen Maschinen-Bauteil 7 gemessen werden soll. An diesem anderen Maschinen-Bauteil 7 ist eine Abtasteinrichtung 8 mittels eines Mitnehmers 9 befestigt, der durch einen mit dachförmig angeordneten Dichtlippen 10 verschlossenen Längsschlitz 11 im Hohlprofil 2 hindurchragt.

Das Besondere an der Abtasteinrichtung 8 sind zwei unabhängig arbeitende Abtastköpfe 8a und 8b, die mittels eines Joches 8c in einem festen Abstand zueinander montiert sind. Die Abtasteinrichtung 8 ist so geführt, daß die Abtastköpfe 8a und 8b von der Vorderseite und der Rückseite der Maßverkörperung 3 aus die Meßteilung 4 abtasten.

Der Abstand der beiden Abtastköpfe 8a und 8b von der Teilungsebene ist so bemessen, daß unter Berücksichtigung des Brechungsverhaltens und der jeweils bei der Abtastung verwendeten Lichtwellenlänge immer ein der Fläche und der Raumorientierung nach identisches Feld der Meßteilung 4 - gleichzeitig von der Vorderseite und von der Rückseite - von den beiden Abtastköpfen 8a und 8b abgetastet wird. Der optimale Abtastabstand kann also entsprechend der genannten Parameter einmal eingestellt werden und bleibt durch das Joch 8c dann erhalten.

Die in den Figuren 2 und 3 ersichtliche Befestigung der Maßverkörperung 3 mit Hilfe der Spannpratze 5 und der Vergußmasse 5a hat für die Meßgenauigkeit erhebliche Vorteile, jedoch ist die Erfindung nicht auf eine derartige Befestigung der Maßverkörperung 3 beschränkt. Die Meßteilung 4 muß lediglich von der Vorderseite und der Rückseite für die Abtastköpfe 8a und 8b zugänglich sein.

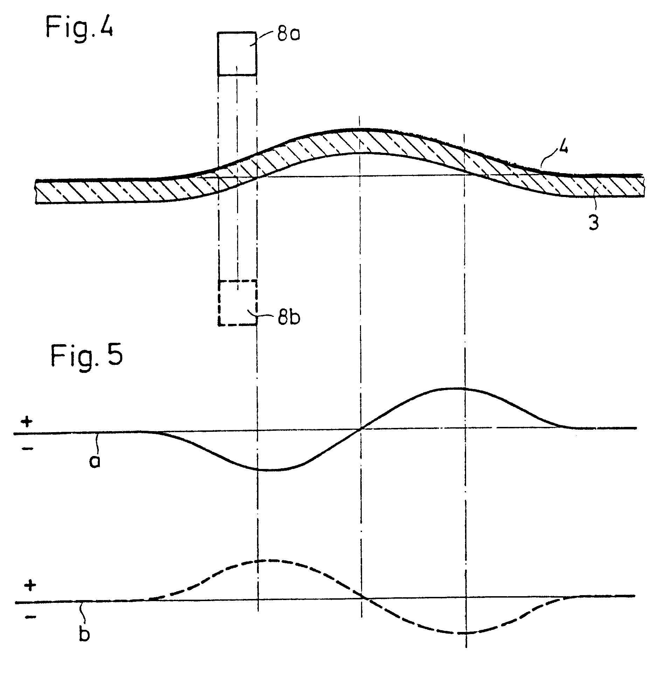

In Figur 4 ist die Maßverkörperung 3 ohne Gehäuse dargestellt. An ihrer Oberfläche trägt sie die Meßteilung 4. Zur Verdeutlichung der Erfindung ist die Maßverkörperung 3 extrem gekrümmt dargestellt. In der Praxis bewegt sich der zulässige Fehler aus Führung, Krümmung und Unebenheit in der Größenordnung von ± 0,1 mm/m gegenüber ca. ± 0,01 mm/m beim Stand der Technik.

Durch die erfindungsgemäße Anordnung von zwei Abtastköpfen 8a und 8b, die sich bei der Abtastung der Maßverkörperung 3 gegenüberliegen, werden die vorgenannten Fehler weitgehend kompensiert.

In Figur 5 sind die Fehlersignalverläufe a und b schematisch dargestellt, die in den Abtastköpfen 8a und 8b induziert werden. Das die Meßteilung 4 bildende Phasengitter hat zur Luftseite hin die gleiche Gitterfunktion, wie zur Substratseite. Diese Eigenschaft ermöglicht die gleichzeitige Abtastung eines identischen Teilungsflächenelements mit den zwei Abtastköpfen 8a und 8b von der Vorderseite und der Rückseite der Meßteilung 4. Das durch die genannten Fehler des Teilungsverlaufes induzierte Fehlersignal tritt daher bei beiden Abtastköpfen 8a und 8b angenähert identisch auf, jedoch mit ungekehrtem Vorzeichen.

In der Praxis bedeutet das, daß die Genauigkeit der Positionsmessung nicht mehr durch die winkelmäßigen Lageänderungen der Teilungsebene verfälscht wird.

In den Figuren 6a und 6b sind Abschnitte der Maßverkörperung 3 mit aufgebrachtem Phasengitter als Meßteilung 4 dargestellt. Die Herstellung einer derartigen Maßverkörperung 3 ist in der DE-OS 34 12 980 beschrieben.

Durch die erfindungsgemäße Abtastung von der Vorder- und Rückseite ist es möglich, daß als Teilungssubstrat ganz billiges Glas (Spiegelglas, Floatglas) verwendet werden kann und daß die Montage der Maßverkörperung 3 völlig unproblematisch wird, wenn dünne Substrate zum Einsatz kommen, d.h. durch Biegung verursachte Reckungen und Stauchungen der Teilungsebene kleine und systemzulässige Längenänderungen der Maßverkörperung bewirken.

Die durch die beschriebene Maßnahme erweiterte Ebenheitstoleranz von Phasengitter-Teilungsstrukturen erlaubt selbst für hochgenaue und hochauflösende Meßsysteme eine überaus einfache und kostengünstige Montageanordnung auch bei größeren Meßlängen.

Die Fertigung hochgenauer Maßstäbe mit Hilfe photolithographischer Reproduktionsverfahren wird enorm vereinfacht.

## Patentansprüche

1. Lichtelektrische inkrementale Positionsmeßeinrichtung mit einer Maßverkörperung (3), die ein zweiseitig nutzbares Auflichtphasengitter als Meßteilung (4) trägt, mit wenigstens einer Abtasteinrichtung (8) zur Abtastung der Meßteilung (4), dadurch gekennzeichnet, daß die Abtasteinrichtung (8) auf zwei sich gegenüberliegenden Seiten der Maßverkörperung (3) je einen Abtastkopf (8a und 8b) zur Abtastung der Vorder- und Rückseite der Meßteilung (4) trägt und daß beide Abtastköpfe (8a und 8b) auf ein identisches Feld der Meßteilung (4) ausgerichtet sind.

2. Positionsmeßeinrichtung nach Anspruch 1, dadurch gekennzeichnet, daß die Abtastköpfe (8a und 8b) Abtastsignale liefern, die zur Meßwertbildung zusammengefaßt werden.

3. Positionsmeßeinrichtung nach Anspruch 1, dadurch gekennzeichnet, daß die Meßteilung (4) als Auflichtphasengitter ausgebildet ist, dessen Gitterstruktur zur Luftseite und zur Substratseite hin identische optische Eigenschaften aufweist.

4. Positionsmeßeinrichtung nach Anspruch 1, dadurch gekennzeichnet, daß die Maßverkörperung (3) in einem Hohlprofil (2) durch mechanische Klemmung fixiert ist, wobei die Klemmung bei etwa der halben Meßlänge mittels einer schmalen Spannpratze (5) erfolgt.

5. Positionsmeßeinrichtung nach Anspruch 1 und 4, dadurch gekennzeichnet, daß die Maßverkörperung (3) an ihrer Basis (3a) in dauerelastischer Vergußmasse (5a) eingebettet ist.

## Claims

1. Photoelectric incremental position measuring device with a measurement embodiment (3) which bears an incident-light phase grating usable on two sides as a measuring scale (4), having at least one scanning device (8) for scanning the measuring scale (4), characterised in that the scanning device (8) bears a scanning head each (8a and 8b) on two opposite sides of the measurement embodiment (3) for scanning the front and back of the measuring scale (4) and both scanning heads (8a and 8b) are aligned on an identical section of the measuring scale (4).

2. Position measuring device according to claim 1, characterised in that the scanning heads (8a and 8b) supply scanning signals which are combined for forming a measurement value.

3. Position measuring device according to claim 1, characterised in that the measuring scale (4) is in the form of an incident-light phase grating whose structure has identical optical properties towards the atmosphere side and the substrate side.

4. Position measuring device according to claim 1, characterised in that the measurement embodiment (3) is fixed in a hollow section (2) by mechanical clamping, the clamping taking place at about halfway along the length of measurement by means of a narrow clamping shoe (5).

5. Position measuring device according to claims 1 and 4, characterised in that the measurement embodiment (3) is embedded at its base (3a) in long-life elastic sealing compound (5a).

**Revendications**

1. Dispositif de mesure de position incrémental photo-électrique comportant une mesure matérialisée (3), qui porte comme graduation de mesure (4) un réseau de phase à lumière incidente utilisable de deux côtés, au moins un dispositif de lecture (8) pour la lecture de la graduation de mesure (4), caractérisé en ce que le dispositif de lecture (8) porte respectivement sur deux côtés opposés de la mesure matérialisée (3) une tête de lecture (8a et 8b) pour la lecture de la face avant et de la face arrière de la graduation de mesure (4) et en ce que les deux têtes de lecture (8a et 8b) sont alignées sur un champ identique de la graduation de mesure (4).

2. Dispositif de mesure de position selon la revendication 1 caractérisé en ce que les têtes de lecture (8a et 8b) délivrent des signaux de mesure qui sont combinés pour former la valeur de mesure.

3. Dispositif de mesure de position selon la revendication 1 caractérisé en ce que la graduation de mesure (4) est réalisée sous forme de réseau de phase à lumière incidente, dont la structure a des caractéristiques optiques identiques côté air et côté support.

4. Dispositif de mesure de position selon la revendication 1 caractérisé en ce que la mesure matérialisée (3) est fixée par des moyens de fixation mécaniques à l'intérieur d'un profilé creux (2), la fixation étant réalisée au moyen d'une griffe de serrage (5) étroite sensiblement à mi-longueur de la longueur de mesure.

5. Dispositif de mesure de position selon les revendications 1 et 4 caractérisé en ce que la mesure matérialisée (3) est noyée à sa base (3a) dans une masse de scellement (5a) à élasticité permanente.

Fig. 1

Fig. 2

Fig. 3

Fig.4

8a

4

3

8b

Fig.5

+
−

a

+
−

b

Fig. 6b

Fig. 6a